# FASCICULE DE BREVET EUROPEEN

(11) **EP 3 638 891 B1**
(45) Date de publication et mention de la délivrance du brevet: **31.08.2022**
(21) Numéro de dépôt: 18735676.1
(22) Date de dépôt: 12.06.2018
(51) Int. Cl.: F01M 1/08, F01P 3/08, F16B 39/10, F01P 3/00

(54) **GICLEUR A VIS CAPTIVE**
UNVERLIERBARE SCHRAUBENDÜSE
CAPTIVE SCREW NOZZLE

(30) Priorité: 16.06.2017 FR 1755504
(43) Date de publication de la demande: 22.04.2020
(73) Titulaire: Bontaz Centre R&D, 74460 Marnaz (FR)
(72) Inventeur: PINEAU, Frédéric, Daniel, Bernard, 74370 Metz-Tessy (FR); TALOTTI, Marc, Eugène, 74700 Sallanches (FR); SAPPEY, Arnaud, Guy, 74130 Ayse (FR)
(74) Mandataire: Brevalex
(86) Numéro de dépôt international: PCT/FR2018/051364
(87) Numéro de publication internationale: WO 2018/229414

(56) Documents cités:
- WO-A1-2017/038756
- CN-A- 105 736 112
- DE-A1-102013 004 519
- DE-C- 460 832
- FR-A1- 2 719 868
- FR-A5- 2 061 433
- JP-A- 2002 206 516
- US-A- 1 460 884

## Description

### DOMAINE TECHNIQUE

La présente invention concerne un gicleur d'huile destiné par exemple au refroidissement des pistons d'un moteur thermique ou encore au graissage de pièces mécaniques. En particulier, la présente invention concerne une solution de maintien du gicleur d'huile sur un support.

### ART ANTÉRIEUR

Un gicleur, par exemple un gicleur d'huile, connu de l'état de la technique, voir notamment WO2017/038756 A1, comprend
- un corps de gicleur ;
- un plaque d'orientation comprenant un trou dans lequel est inséré le corps de gicleur;
- une vis de maintien.

La vis de maintien assure le maintien et/ou le serrage du gicleur contre une surface support, par exemple la surface du carter d'un moteur à combustion interne.

En particulier, un tel gicleur peut être mis en œuvre pour le graissage d'une chaine et/ou le refroidissement d'un piston d'un moteur à combustion interne.

Cependant, les moteurs à combustion interne offrent un espace exigu qui impose aux gicleurs d'être préassemblés avant leur montage dans le bloc moteur.

Aussi, afin d'éviter la perte de la vis de maintien lors du montage du gicleur sur le bloc moteur, cette dernière est généralement retenue captive au gicleur par un joint torique ou un patch de colle en mousse.

Ces solutions ne sont cependant pas satisfaisantes.

En effet, les coûts générés par la mise en œuvre du joint torique ou du patch ne sont pas compatibles avec les requis de l'industrie automobile.

Par ailleurs, tant le joint torique que le patch peuvent se décomposer et/ou libérer des particules et nuire au bon fonctionnement du moteur.

Le but de la présente invention est de proposer une solution de maintien de la vis de maintien du gicleur ne présentant pas les inconvénients précités.

### EXPOSÉ DE L'INVENTION

Le but de la présente invention est au moins en partie atteint par un gicleur à vis captive comprenant une vis destinée à maintenir le gicleur sur un support, ladite vis comprenant une tête de vis coopérant avec un organe de maintien, solidaire du gicleur, et formant une butée retenant la vis captive au gicleur.

Selon un mode de mise en œuvre, la tête de vis comprend une collerette ou une gorge, l'organe de maintien retenant la vis au niveau de ladite collerette.

Selon un mode de mise en œuvre, le gicleur comprend en outre un corps de gicleur et une plaque d'orientation, l'organe de maintien et la plaque d'orientation étant liés par une liaison fixe.

Selon un mode de mise en œuvre, le corps de gicleur comprend une bague métallique pourvue d'un canal axial dans lequel est engagée la vis, et la plaque d'orientation comprend un trou dans lequel est inséré le corps de gicleur.

Selon un mode de mise en œuvre, l'organe de maintien et la plaque d'orientation forment un élément monobloc, avantageusement la plaque d'orientation comprend un matériau plastique.

Selon un mode de mise en œuvre, l'organe de maintien comprend un clip en projection par rapport à une face supérieure de la plaque d'orientation, le clip comprenant au niveau d'une extrémité libre une protubérance agencée pour former la butée destinée à retenir la vis captive au gicleur.

Selon un mode de mise en œuvre, la plaque d'orientation comprend en outre deux joues, de protection du clip, en projection par rapport la face supérieure de la plaque d'orientation, et disposées de part et d'autre du clip.

Selon un mode de mise en œuvre, la vis est déportée du corps de gicleur, et dans lequel l'organe de maintien comprend une fourchette formant la butée destinée à retenir la vis captive au gicleur, ladite fourchette comprenant deux bras, liées entre eux par une base, et entourant la tête de vis.

Selon un mode de mise en œuvre, l'organe de maintien comprend également une section d'attache insérée dans une glissière latérale ménagée dans la plaque d'orientation, avantageusement la section d'attache comprend un clip de verrouillage agencé pour permettre une liaison fixe entre l'organe de maintien et la plaque d'orientation, encore plus avantageusement, le clip de verrouillage coopère avec un ergot ménagé au niveau de la glissière.

Selon un mode de mise en œuvre, la vis est déportée du corps de gicleur, et dans lequel l'organe de maintien comprend un élément annulaire à l'intérieur de laquelle est engagée la tête de vis, formant la butée destinée à retenir la vis captive au gicleur.

Selon un mode de mise en œuvre, la plaque d'orientation comprend deux pattes latérales, et dans lequel l'organe de maintien comprend en outre deux poutres s'étendant, à partir de la élément annulaire, selon deux directions diamétralement opposées, chacune des deux poutres comprenant une extrémité libre au niveau de laquelle est disposé un clip coopérant chacun avec une des deux pattes latérales de manière à assurer la liaison fixe entre la plaque de maintien et l'organe de maintien.

Selon un mode de mise en œuvre, la plaque d'orientation comprend une patte latérale, ladite patte, la vis et le corps de gicleur étant alignés, et dans lequel l'organe de maintien comprend en outre deux poutres s'étendant, à partir de la élément annulaire, selon deux directions diamétralement opposées, l'une des deux poutres comprenant une extrémité libre au niveau de laquelle est disposé un clip coopérant avec la patte latérale, l'autre poutre comprenant également une extrémité libre au niveau de laquelle est disposée une fourchette d'attache coopérant avec une gorge circonférentielle formée au niveau d'une surface externe du corps de gicleur.

Selon un mode de mise en œuvre, la vis est déportée du corps de gicleur, et dans lequel l'organe de maintien comprend une section annulaire adaptée pour être engagée latéralement à la vis et formant la butée destinée à retenir la vis captive au gicleur.

### BRÈVE DESCRIPTION DES DESSINS

La présente invention sera mieux comprise sur la base de la description qui va suivre et des dessins en annexe sur lesquels :

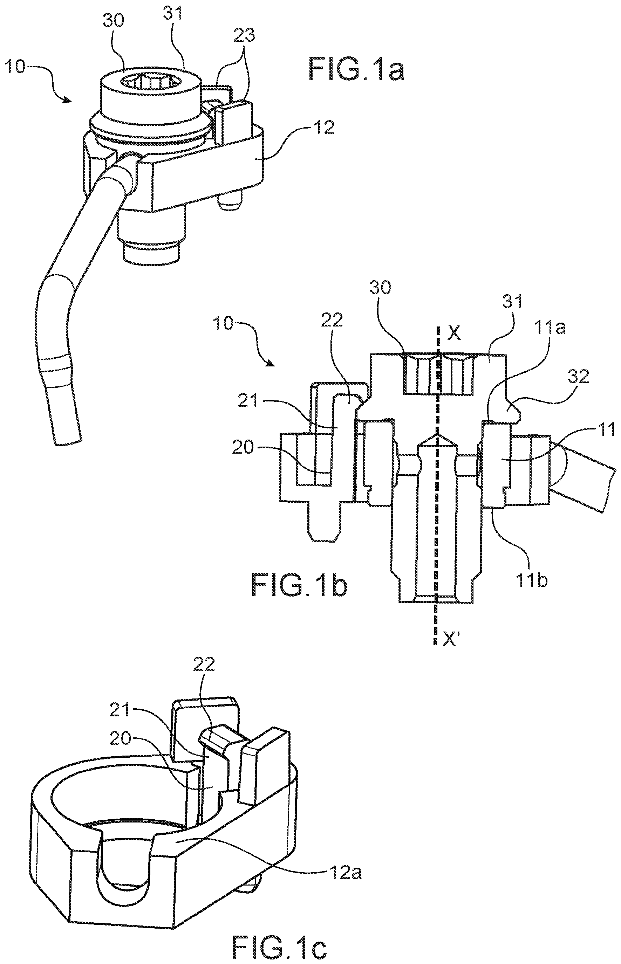

- les figures 1a et 1b représentent, respectivement, une vue en perspective, et une vue selon un plan de coupe passant par l'axe XX', d'un gicleur selon un premier mode de réalisation de la présente invention ;
- la figure 1c représente une vue en perspective de la plaque d'orientation du gicleur mise en œuvre selon le premier mode de réalisation de l'invention ;
- la figure 2a est une représentation en perspective d'un gicleur selon un second mode de réalisation de la présente invention ;
- la figure 2b est une représentation en perspective d'un organe de maintien mis en œuvre dans le second mode de réalisation de la présente invention ;
- la figure 2c est une représentation en perspective de l'agencement de l'organe de maintien et la glissière selon le second mode de réalisation de la présente invention ;
- les figures 3a et 3b sont deux représentations, en perspective, du gicleur selon un troisième mode de réalisation de la présente invention, l'organe de maintien étant réalisé selon une première alternative, les figures 3a et 3b représentant, respectivement, l'organe de maintien démonté et monté ;
- les figures 4a et 4b sont deux représentations, en perspective, du gicleur selon le troisième mode de réalisation de la présente invention, l'organe de maintien étant réalisé selon une seconde alternative, les figures 4a et 4b représentant, respectivement, l'organe de maintien démonté et monté ;
- les figures 5a et 5b sont deux représentations, en perspective, du gicleur selon un quatrième mode de réalisation de la présente invention, les figures 5a et 5b représentant, respectivement, l'organe de maintien démonté et monté.

### EXPOSÉ DÉTAILLÉ DE MODES DE RÉALISATION PARTICULIERS

La présente invention propose une solution maintien d'une vis 30, par exemple une vis 30 de serrage, destinée à serrer le gicleur contre une surface. En particulier, le gicleur peut être un gicleur d'huile serré contre la surface d'un carter de moteur à combustion interne afin d'assurer le graissage d'une chaine ou le refroidissement d'un piston.

La solution de maintien proposée dans la présente invention est destinée à maintenir la vis 30 captive au gicleur 10 par une butée. Le gicleur 10 est alors pourvu d'un organe de maintien 20 jouant le rôle de la butée destinée à maintenir la vis 30 captive au gicleur 10. En particulier, l'organe de maintien 20 retient la vis 30 au niveau de la tête de vis 31.

Sans qu'il soit nécessaire de le préciser, l'organe de maintien 20 ne gêne pas le serrage de la vis.

Selon l'invention, l'organe de maintien 20 est solidaire du gicleur 10. Par « solidaire du gicleur 10 », on entend une pièce mécanique liée au gicleur 10 par une liaison fixe (ou liaison encastrement). Cette définition exclut par conséquent les solutions de maintien impliquant des colles, des rubans adhésifs (double face par exemple), des joints toriques. La liaison fixe telle que décrite dans la suite de la description peut impliquer un organe de maintien 20 formant avec un autre élément constitutif du gicleur 10 une pièce monobloc, ou un organe de maintien 20 lié par des moyens d'attache au gicleur 10.

De manière particulièrement avantageuse, la vis 30 comprend une collerette 32. Par « collerette », on entend une couronne disposée au niveau de la base de la tête de vis 31, et formant une protubérance circonférentielle. Ainsi, la vis 30 peut avantageusement être retenue dans le gicleur 10 au niveau de la collerette 32 par l'organe de maintien 20.

De manière alternative, la vis 30 peut être retenue dans le gicleur 10 au sommet de la tête de vis ou par une gorge aménagée dans celle-ci.

De manière générale, un gicleur 10 peut comprendre un corps de gicleur 11 et une plaque d'orientation 12. En particulier, le corps de gicleur 11 est une pièce métallique dotée d'un conduit d'écoulement d'huile, tandis que la plaque d'orientation 12 est destinée à orienter ledit conduit par rapport au support contre lequel le gicleur 10 est serré.

Selon cette configuration, l'organe de maintien 20 est lié à la plaque d'orientation 12 par une liaison fixe.

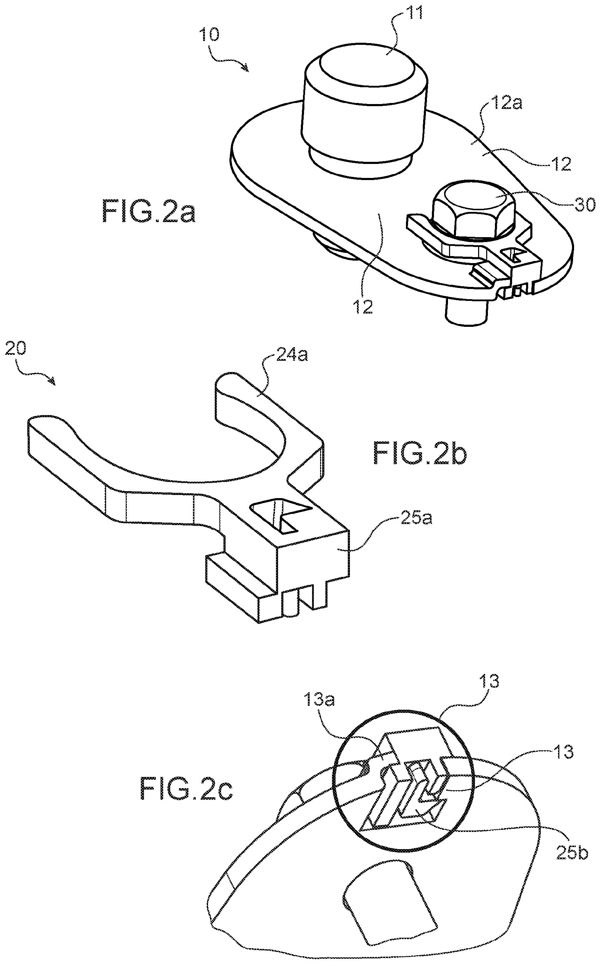

Selon un premier mode de réalisation illustré aux figures la-lc, le corps de gicleur 11 comprend une bague métallique pourvue d'un canal axial (s'étendant selon l'axe XX', figure 2b) dans lequel est engagée la vis 30.

La plaque d'orientation 12, selon ce premier mode de réalisation, comprend un trou dans lequel est inséré le corps de gicleur 11. Il est entendu, sans qu'il soit nécessaire de le préciser, que la bague métallique est engagée dans ledit trou de manière coaxiale.

Avantageusement, l'organe de maintien 20 et la plaque d'orientation 12 forment un élément monobloc. En particulier, ledit élément monobloc peut être en matière plastique, et ainsi être formé par un procédé de moulage.

Afin d'assurer le serrage du gicleur 10 contre le support, la tête de vis 31 est en appui contre une face supérieure 11a de la bague de gicleur 11, opposée à une face inférieure 11b de ladite bague de gicleur 11(la face inférieure 11b de la bague de gicleur 11 est destinée à être en contact avec le support contre lequel le gicleur 10 est serré). La plaque d'orientation 12 est montée frettée et en appui contre une butée sur la bague de gicleur 11. La plaque d'orientation 12 est maintenue en position entre la bague de gicleur 11 et le support contre lequel le gicleur 10 est serré.

De manière particulièrement avantageuse, l'organe de maintien 20 comprend au moins un clip en projection par rapport à la face supérieure 12a de la plaque d'orientation 12. On entend par « clip », une poutre 21 comprenant une extrémité libre au niveau de laquelle est disposée une protubérance 22 latérale.

Ladite protubérance 22 est agencée pour former la butée destinée à retenir la vis 30 captive au gicleur 10. Autrement dit, la protubérance 22 forme un obstacle contre lequel la collerette 32 de la tête de vis 31 bute.

Ainsi, lors du montage de la vis 30 dans la bague métallique, le clip se déforme, et la protubérance 22 du clip se positionne sur la collerette 32 de la vis 30, créant alors un point de retenue de ladite vis 30. En d'autres terme, la vis est retenue par encliquetage dans le clip.

Par ailleurs, cette solution de maintien de la vis 30 évite toute perte de ladite de vis 30, lors des manipulations et/ou transports, de l'assemblage du gicleur 10 jusqu'au montage sur un bloc moteur de ce même gicleur 10.

En outre, cette solution, dès lors que le clip et la plaque d'orientation 12 forment un élément monobloc, ne nécessite pas de pièce additionnelle pour réaliser cette fonction de retenue.

Par surcroit, le clip n'entrave pas le serrage du gicleur 10 contre le support, et permet un déclipsage de la vis 30 sans dommage du clip lors du montage sur le bloc moteur. L'ajustement de longueur de la poutre 21 peut contribuer à laisser un jeu axial à la vis captive. Ce jeu peut être utile lors de la mise en place que gicleur sur son support.

Toujours de manière avantageuse, des joues 23 latérales sont disposées de part et d'autre du clip et en projection par rapport à la face supérieure 12a de la plaque d'orientation 12. Les joues 23 latérales permettent de protéger le clip, et peuvent former avec la plaque d'orientation 12 un élément monobloc.

Par ailleurs, la plaque d'orientation peut comprendre des moyens d'orientation destinés à l'orienter par rapport à la surface sur laquelle est posée. En particulier, les moyens d'orientation peuvent comprendre un ergot, formé sur face inférieure 12b de la plaque d'orientation 12, et destiné à être inséré dans un trou d'orientation du bloc moteur.

Selon un second mode de réalisation illustré aux figures 2a-2c, la vis 30 est déportée du corps de gicleur 11. Autrement dit, la vis 30 n'est pas engagée dans le canal axial du corps de gicleur 11. La plaque d'orientation peut comprendre du métal, par exemple de l'acier.

Par ailleurs, selon ce second mode de réalisation, l'organe de maintien 20 comprend une fourchette 24a formant la butée destinée à retenir la vis 30 captive au gicleur 10. La fourchette 24a comprend ainsi deux bras, liés entre eux par une base, et entoure la tête de vis 31. Ainsi selon ce mode de réalisation, les bras de la fourchette 24a forment la butée destinée à retenir la vis 30 captive au gicleur 10. En particulier, les bras de la fourchette 24a retiennent la vis 30 au niveau de la collerette.

L'organe de maintien 20 peut également comprendre une section d'attache 25a permettant de fixer rigidement ledit organe de maintien 20 à la plaque l'orientation. En particulier, la section d'attache 25a peut être insérée dans une glissière 13 latérale ménagée dans la plaque d'orientation 12.

La glissière latérale est agencée pour guider les deux bras de la fourchette 24a en direction de la tête de vis 31.

La glissière 13 latérale peut comprendre un évidement formé dans la plaque d'orientation, et s'étendre selon une direction diamétrale de la vis 30.

En particulier, la glissière 13 comprend deux bords latéraux, agencés pour guider la section d'attache 25a selon la direction diamétrale de la vis 30. L'un des deux bords latéraux peut être, au moins sur une partie de sa longueur, embouti de manière à former une section d'appui 13a en projection par rapport à la face supérieure 12a de la plaque d'orientation 12, la section d'appui 13a formant un surface d'appui sur la section d'attache 25a.

De manière avantageuse, la section d'attache 25a comprend un clip de verrouillage 25b agencé pour permettre une liaison fixe entre l'organe de maintien 20 et la plaque d'orientation 12. Toujours de manière avantageuse, un ergot coopérant avec le clip de verrouillage 25b peut être ménagé au niveau de la glissière de manière à bloquer le mouvement de l'organe de maintien 20. Ledit ergot 13b est avantageusement formé sur un des deux bords latéraux de la glissière 13.

L'agencement de la section d'attache 25a n'est par ailleurs par limité à une glissière et peut être également mise en œuvre par une combinaison d'une queue d'aronde contenue et d'une queue d'aronde contenante.

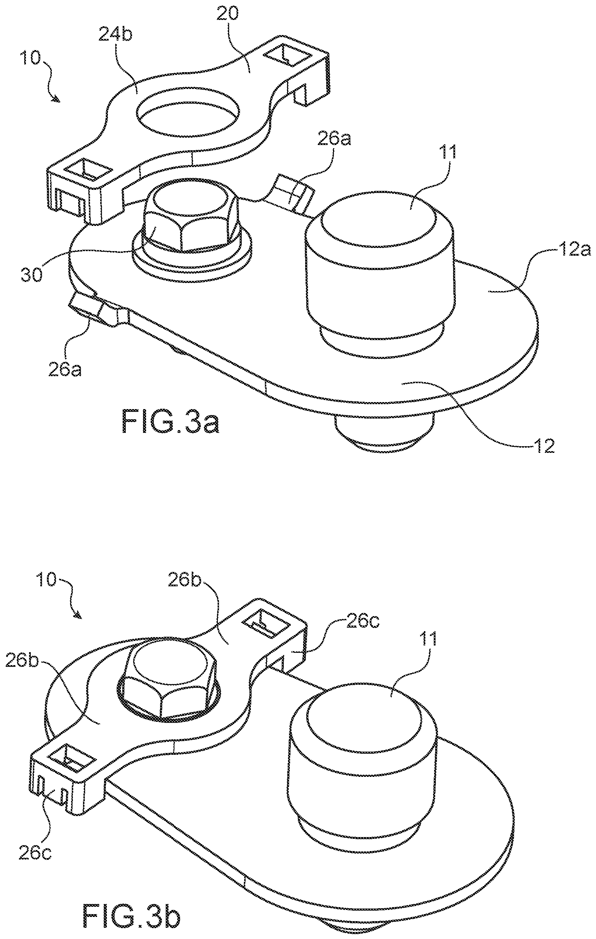

Selon un troisième mode de réalisation illustré aux figure 3a, 3b 4a et 4b, la vis 30 est déportée du corps de gicleur 11, et l'organe de maintien 20 comprend un élément annulaire 24b à l'intérieur duquel est engagée la tête de vis 31 (Par « élément annulaire », on entend une rondelle). Ledit élément annulaire 24b forme la butée destinée à retenir la vis 30 captive au gicleur 10. En particulier, l'élément annulaire 24b retient la vis 30 au niveau de la collerette 32. L'élément annulaire 24b est lié à la plaque d'orientation 12 selon une liaison fixe par des moyens d'attache.

Selon une première alternative (figures 3a et 3b), les moyens d'attache peuvent comprendre deux pattes latérales 26a disposées sur la plaque d'orientation 12, ainsi que deux poutres 26b s'étendant, à partir de l'élément annulaire 24b, selon deux directions diamétralement opposées. Chacune des deux poutres 26b comprend une extrémité libre au niveau de laquelle est disposé un clip 26c coopérant chacun avec une des deux pattes latérales 26a de manière à assurer la liaison fixe entre la plaque d'orientation 13 et l'organe de maintien 20.

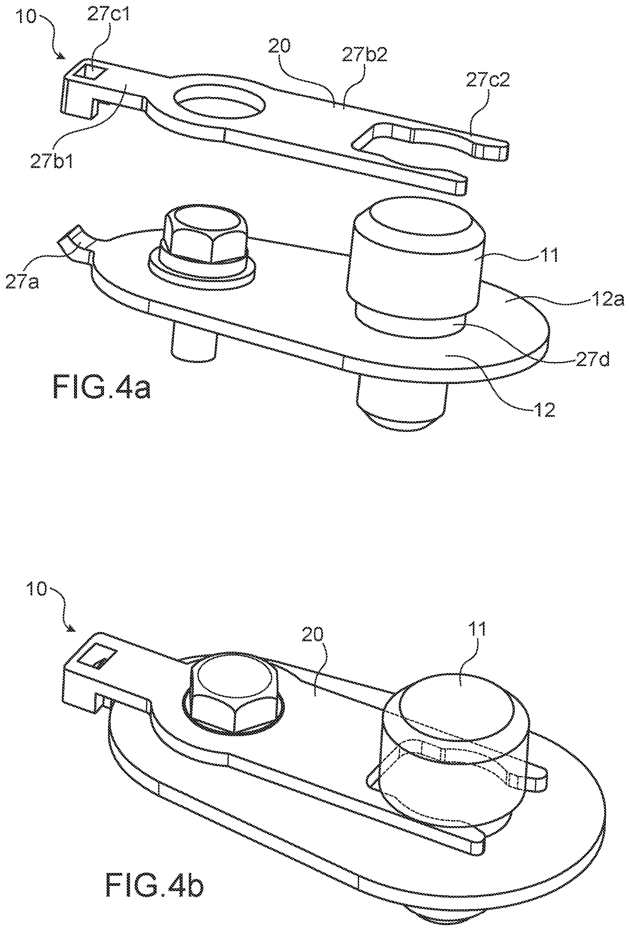

Selon une seconde alternative (figures 4a et 4b), les moyens d'attache peuvent comprendre une patte latérale 27a, en alignement avec la vis 30 et le corps de gicleur 11, ainsi qu'une première 27b1 et une seconde 27b2 poutres s'étendant, à partir de l'élément annulaire 24b, selon deux directions diamétralement opposées. La première poutre 27b1 comprend une extrémité libre au niveau de laquelle est disposé un clip 27c1 coopérant avec la patte latérale 27a, l'autre poutre 27b2 comprend également une extrémité libre au niveau de laquelle est disposée une fourchette d'attache 27c2 coopérant avec une gorge 27d circonférentielle formée au niveau d'une surface externe du corps de gicleur 11. Ainsi, la fourchette d'attache 27c2 comprend deux bras entourant le corps de gicleur 11 au niveau de la gorge 27d. Le maintien de l'organe de maintien 20 sur le gicleur 10 est alors assuré en engageant la fourchette d'attache 27c2 dans la gorge 27d, et la patte latérale 27a dans le clip 27b1.

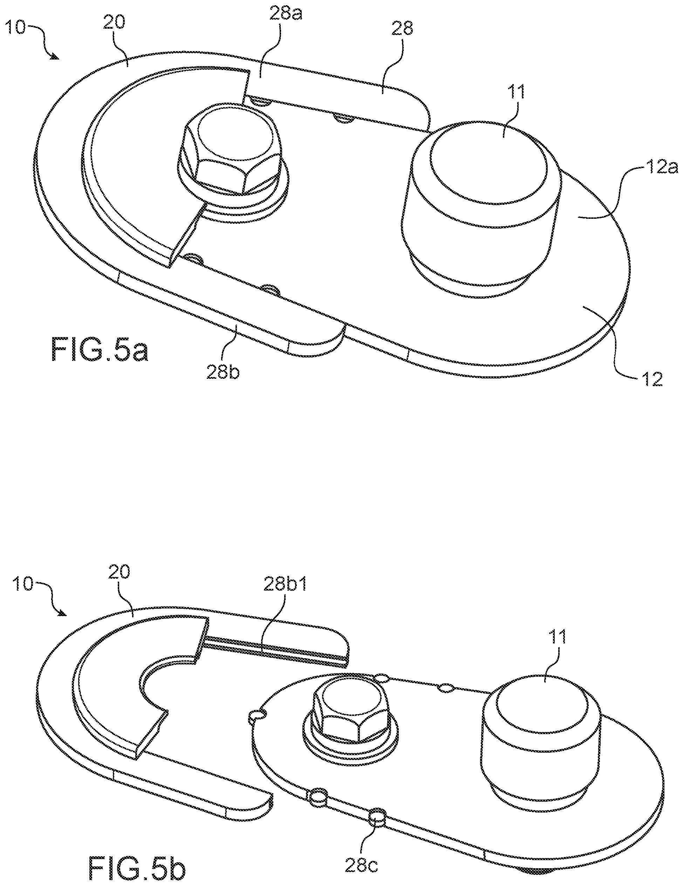

Selon un quatrième mode de réalisation (figures 5a et 5b), la vis 30 est déportée du corps de gicleur 11, et l'organe de maintien 20 comprend une portion de rondelle adaptée pour être engagée latéralement à la vis 30, et former ainsi la butée destinée à retenir la vis 30 captive au gicleur 10.

Toujours selon ce quatrième mode de réalisation, l'organe de maintien 20 est maintenu par une liaison fixe à la plaque d'orientation 12. En particulier, la liaison fixe peut être assurée par une section d'attache généralement plane. La section d'attache 28 comprend une face supérieure 28a et une face inférieure essentiellement parallèles reliées entre elles par un contour 28b. La portion de rondelle est liée à la section d'attache 28 par la face supérieure 28a de ladite section d'attache 28, et est en partie en butée contre la face supérieure 12a de la plaque d'orientation 12. Le contour 28b comprend une section de contour 28b1 destinée à être en contact avec une section de contour périphérique de la plaque d'orientation 12, et de forme complémentaire à ladite section périphérique.

De manière avantageuse, la section de contour 28b1 comprend un épaulement destiné à être en butée contre des ergots 28c en projection latérale par rapport à la section de contour périphérique de la plaque d'orientation 12. Il est entendu que la butée contre les ergots s'effectue dans le sens opposé à la butée de la section annulaire contre la face supérieure 12a de la plaque d'orientation 12. L'organe de maintien 20 est, selon cette configuration, alors maintenu par réaction entre la collerette et la tête de vis, et par réaction entre l'épaulement et les ergots.

De manière alternative, les ergots 28c peuvent être remplacés par un contre épaulement sur la section de contour périphérique de la plaque d'orientation 12, ledit contre épaulement coopérant avec l'épaulement de la section de contour 28b1.

Selon les second, troisième et quatrième modes de réalisation, la plaque d'orientation peut être faite d'un matériaux métallique, par exemple de l'acier.

Selon ces mêmes modes de réalisation, il n'y a pas de perte de vis lors des manipulations du gicleur de l'assemblage jusqu'à son montage sur une surface.

Par ailleurs, les solutions de maintien de la vis captive au gicleur n'entrainent aucune pollution via des particules du moteur dans lequel le gicleur est destiné à être monté.

## Revendications

1. Gicleur à vis captive (10) comprenant une vis (30) destinée à maintenir le gicleur (10) sur un support, ladite vis (30) comprenant une tête de vis (31) coopérant avec un organe de maintien (20), solidaire du gicleur (10), et formant une butée retenant la vis (30) captive au gicleur (10) lors du montage dudit gicleur.

2. Gicleur à vis captive selon la revendication 1, dans lequel la tête de vis (31) comprend une collerette (32) ou une gorge, l'organe de maintien (20) retenant la vis (30) au niveau de ladite collerette (32).

3. Gicleur à vis captive selon la revendication 1 ou 2, dans lequel le gicleur (10) comprend en outre un corps de gicleur (11) et une plaque d'orientation (12), l'organe de maintien (20) et la plaque d'orientation (12) étant liés par une liaison fixe.

4. Gicleur à vis captive selon la revendication 3, dans lequel le corps de gicleur (11) comprend une bague métallique pourvue d'un canal axial dans lequel est engagée la vis (30), et la plaque d'orientation (12) comprend un trou dans lequel est inséré le corps de gicleur (11).

5. Gicleur à vis captive selon la revendication 3 ou 4, dans lequel l'organe de maintien (20) et la plaque d'orientation (12) forment un élément monobloc, avantageusement la plaque d'orientation (12) comprend un matériau plastique.

6. Gicleur à vis captive selon l'une des revendications 3 à 5, dans lequel l'organe de maintien (20) comprend au moins un clip en projection par rapport à une face supérieure (12a) de la plaque d'orientation (12), le clip comprenant au niveau d'une extrémité libre une protubérance agencée pour former la butée destinée à retenir la vis (30) captive au gicleur (10).

7. Gicleur à vis captive selon la revendication 6, dans lequel la plaque d'orientation (12) comprend en outre deux joues (23), de protection du clip, en projection par rapport la face supérieure (12a) de la plaque d'orientation (12), et disposées de part et d'autre du clip.

8. Gicleur à vis captive selon la revendication 3 en combinaison avec la revendication 2, dans lequel la vis (30) est déportée du corps de gicleur (11), et dans lequel l'organe de maintien (20) comprend une fourchette (24a) formant la butée destinée à retenir la vis (30) captive au gicleur (10), ladite fourchette (24a) comprenant deux bras, liées entre eux par une base, et entourant la tête de vis (31).

9. Gicleur à vis captive selon la revendication 8, dans lequel l'organe de maintien (20) comprend également une section d'attache (25a) insérée dans une glissière latérale ménagée dans la plaque d'orientation (12), avantageusement la section d'attache (25a) comprend un clip de verrouillage agencé pour permettre une liaison fixe entre l'organe de maintien (20) et la plaque d'orientation (12), encore plus avantageusement, le clip de verrouillage coopère avec un ergot ménagé au niveau de la glissière.

10. Gicleur à vis captive selon la revendication 3 en combinaison avec la revendication 2, dans lequel la vis (30) est déportée du corps de gicleur (11), et dans lequel l'organe de maintien (20) comprend un élément annulaire (24b) à l'intérieur duquel est engagée la tête de vis (31), formant la butée destinée à retenir la vis (30) captive au gicleur (10).

11. Gicleur selon la revendication 10, dans lequel la plaque d'orientation (12) comprend deux pattes latérales, et dans lequel l'organe de maintien (20) comprend en outre deux poutres s'étendant, à partir de l'élément annulaire (24b), selon deux directions diamétralement opposées, chacune des deux poutres comprenant une extrémité libre au niveau de laquelle est disposé un clip coopérant chacun avec une des deux pattes latérales de manière à assurer la liaison fixe entre la plaque d'orientation et l'organe de maintien (20).

12. Gicleur selon la revendication 10, dans lequel la plaque d'orientation (12) comprend une patte latérale, ladite patte, la vis (30) et le corps de gicleur (11) étant alignés, et dans lequel l'organe de maintien (20) comprend en outre deux poutres s'étendant, à partir de l'élément annulaire (24b), selon deux directions diamétralement opposées, l'une des deux poutres comprenant une extrémité libre au niveau de laquelle est disposé un clip coopérant avec la patte latérale, l'autre poutre comprenant également une extrémité libre au niveau de laquelle est disposée une fourchette d'attache coopérant avec une gorge circonférentielle formée au niveau d'une surface externe du corps de gicleur (11).

13. Gicleur selon la revendication 2 et 3, dans lequel la vis (30) est déportée du corps de gicleur (11), et dans lequel l'organe de maintien (20) comprend une section annulaire adaptée pour être engagée latéralement à la vis (30) et formant la butée destinée à retenir la vis (30) captive au gicleur (10).

## Patentansprüche

1. Unverlierbare Schraubendüse (10), umfassend eine Schraube (30), die dazu bestimmt ist, die Düse (10) auf einem Träger zu halten, wobei die Schraube (30) einen Schraubenkopf (31), der mit einem Halteelement (20), das einstückig mit der Düse (10) ist, zusammenwirkt und einen Anschlag formt, der die Schraube (30) bei der Montage der Düse unverlierbar an der Düse (10) hält.

2. Unverlierbare Schraubendüse nach Anspruch 1, wobei der Schraubenkopf (31) einen Kragen (32) oder einen Hals umfasst, wobei das Halteelement (20) die Schraube (30) in Höhe des Kragens (32) hält.

3. Unverlierbare Schraubendüse nach Anspruch 1 oder 2, wobei die Düse (10) ferner einen Düsenkörper (11) und eine Ausrichtungsplatte (12) umfasst, wobei das Halteelement (20) und die Ausrichtungsplatte (12) mit einer festen Verbindung miteinander verbunden sind.

4. Unverlierbare Schraubendüse nach Anspruch 3, wobei der Düsenkörper (11) einen Metallring umfasst, der mit einem Axialkanal versehen ist, in den die Schraube (30) eingreift, und die Ausrichtungsplatte (12) ein Loch umfasst, in das der Düsenkörper (11) eingeführt wird.

5. Unverlierbare Schraubendüse nach Anspruch 3 oder 4, wobei das Halteelement (20) und die Ausrichtungsplatte (12) ein einteiliges Element formen, wobei die Ausrichtungsplatte (12) vorteilhafterweise ein Kunststoffmaterial umfasst.

6. Unverlierbare Schraubendüse nach einem der Ansprüche 3 bis 5, wobei das Halteelement (20) mindestens eine Klammer umfasst, die bezüglich einer oberen Fläche (12a) der Ausrichtungsplatte (12) vorsteht, wobei die Klammer im Bereich eines freien Endes einen Vorsprung umfasst, der angeordnet ist, um den Anschlag zu formen, der dazu bestimmt ist, die Schraube (30) unverlierbar an der Düse (10) zu halten.

7. Unverlierbare Schraubendüse nach Anspruch 6, wobei die Ausrichtungsplatte (12) ferner zwei Wangen (23) zum Schutz der Klammer umfasst, die bezüglich der oberen Fläche (12a) der Ausrichtungsplatte (12) vorstehen und beidseits der Klammer angeordnet sind.

8. Unverlierbare Schraubendüse nach Anspruch 3 in Kombination mit Anspruch 2, wobei die Schraube (30) gegenüber dem Düsenkörper (11) versetzt ist, und wobei das Halteelement (20) eine Gabel (24a) umfasst, die den Anschlag formt, der dazu bestimmt ist, die Schraube (30) unverlierbar an der Düse (10) zu halten, wobei die Gabel (24a) zwei Arme umfasst, die untereinander über eine Basis verbunden sind, und den Schraubenkopf (31) umgibt.

9. Unverlierbare Schraubendüse nach Anspruch 8, wobei das Halteelement (20) auch einen Befestigungsabschnitt (25a) umfasst, der in eine seitliche Laufschiene eingeführt ist, die in der Ausrichtungsplatte (12) angeordnet ist, wobei der Befestigungsabschnitt (25a) vorteilhafterweise eine Verriegelungsklammer umfasst, die angeordnet ist, um eine feste Verbindung zwischen dem Halteelement (20) und der Ausrichtungsplatte (21) zu ermöglichen, noch weiter bevorzugt wirkt die Verriegelungsklammer mit einer Nase zusammen, die im Bereich der Laufschiene angeordnet ist.

10. Unverlierbare Schraubendüse nach Anspruch 3 in Kombination mit Anspruch 2, wobei die Schraube (30) gegenüber dem Düsenkörper (11) versetzt ist, und wobei das Halteelement (20) ein ringförmiges Element (24b) umfasst, in dessen Inneren der Schraubenkopf (31) in Eingriff genommen ist, wodurch der Anschlag geformt wird, der dazu bestimmt ist, die Schraube (30) unverlierbar an der Düse (10) zu halten.

11. Düse nach Anspruch 10, wobei die Ausrichtungsplatte (12) zwei seitliche Laschen umfasst und wobei das Halteelement (20) ferner zwei Träger umfasst, die sich ausgehend vom ringförmigen Element (24b) entlang zweier diametral entgegengesetzter Richtungen erstrecken, wobei jeder der zwei Träger ein freies Ende umfasst, in dessen Bereich eine Klammer angeordnet ist, die jeweils mit einer der zwei seitlichen Laschen zusammenwirkt, um die feste Verbindung zwischen der Ausrichtungsplatte und dem Halteelement (20) sicherzustellen.

12. Düse nach Anspruch 10, wobei die Ausrichtungsplatte (12) eine seitliche Lasche umfasst, wobei die Lasche, die Schraube (30) und der Düsenkörper (11) ausgerichtet sind und wobei das Halteelement (20) ferner zwei Träger umfasst, die sich ausgehend vom ringförmigen Element (24b) entlang zweier diametral entgegengesetzter Richtungen erstrecken, wobei eine der zwei Laschen ein freies Ende umfasst, in dessen Bereich eine Klammer angeordnet ist, die mit der seitlichen Lasche zusammenwirkt, wobei der andere Träger auch ein freies Ende umfasst, in dessen Bereich eine Befestigungsgabel angeordnet ist, die mit einem im Bereich einer Außenfläche des Düsenkörpers (11) geformten Umfangshals zusammenwirkt.

13. Düse nach Anspruch 2 und 3, wobei die Schraube (30) gegenüber dem Düsenkörper (11) versetzt ist, und wobei das Halteelement (20) einen ringförmigen Abschnitt umfasst, der angepasst ist, um die Schraube (30) seitlich in Eingriff zu nehmen und dadurch den Anschlag formt, der dazu bestimmt ist, die Schraube (30) unverlierbar an der Düse (10) zu halten.

## Claims

1. Captive screw spray nozzle (10) comprising a screw (30) that will retain the spray nozzle (10) on a support, said screw (30) comprising a screw head (31) cooperating with a retaining element (20), fixed to the spray nozzle (10), and forming a stop retaining the screw (30) captive on the spray nozzle (10) during assembly of said spray nozzle.

2. Captive screw spray nozzle according to claim 1, wherein the screw head (31) comprises a collar (32) or a groove, the retaining element (20) retaining the screw (30) at said collar (32).

3. Captive screw spray nozzle according to claim 1 or 2, wherein the spray nozzle (10) also comprises a spray nozzle body (11) and an orientation plate (12), the retaining element (20) and the orientation plate (12) being held together by a fixed connection.

4. Captive screw spray nozzle according to claim 3, wherein the spray nozzle body (11) comprises a metal ring in which there is an axial channel in which the screw (30) is engaged, and the orientation plate (12) comprises a hole in which the spray nozzle body (11) is inserted.

5. Captive screw spray nozzle according to claim 3 or 4, wherein the retaining element (20) and the orientation plate (12) form a single-piece element, advantageously the orientation plate (12) comprises a plastic material.

6. Captive screw spray nozzle according to one of claims 3 to 5, wherein the retaining element (20) comprises at least one clip projecting from an upper face (12a) of the orientation plate (12), the clip comprising a protuberance at a free end arranged to form the stop that will retain the screw (30) captive to the spray nozzle (10).

7. Captive screw spray nozzle according to claim 6, wherein the orientation plate (12) also comprises two side plates (23) for protection of the clip, projecting from the upper face (12a) of the orientation plate (12) and arranged on each side of the clip.

8. Captive screw spray nozzle according to claim 3 in combination with claim 2, wherein the screw (30) is offset from the body of the spray nozzle (11), and wherein the retaining element (20) comprises a fork (24a) forming the stop that will retain the screw (30) captive to the spray nozzle (10), said fork (24a) comprising two arms connected to each other through a base, and surrounding the screw head (31).

9. Captive screw spray nozzle according to claim 8, wherein the retaining element (20) also comprises a fastening section (25a) inserted in a lateral slide formed in the orientation plate (12), advantageously the fastening section (25a) comprises a locking clip arranged to enable a fixed connection between the retaining element (20) and the orientation plate (12), and even more advantageously, the locking clip cooperates with a pin formed at the slide.

10. Captive screw spray nozzle according to claim 3 in combination with claim 2, wherein the screw (30) is offset from the spray nozzle body (11), and wherein the retaining element (20) comprises an annular element (24b) inside which the screw head (31) is engaged, forming the stop that will retain the screw (30) captive to the spray nozzle (10).

11. Spray nozzle according to claim 10, wherein the orientation plate (12) comprises two lateral tabs, and wherein the retaining element (20) also comprises two beams extending from the annular element (24b) along two diametrically opposite directions, each of the two beams comprising a free end at which a clip is arranged, each cooperating with one of the two lateral tabs to make the fixed connection between the orientation plate and the retaining element (20).

12. Spray nozzle according to claim 10, wherein the orientation plate (12) comprises a lateral tab, said tab, the screw (30) and the spray nozzle body (11) being aligned, and wherein the retaining element (20) also comprises two beams extending from the annular element (24b) along two diametrically opposite directions, one of the two beams comprising a free end at which there is a clip cooperating with the lateral tab, the other beam also having a free end at which there is an attachment fork cooperating with a circumferential groove formed on an external surface of the spray nozzle body (11).

13. Spray nozzle according to claims 2 and 3, wherein the screw (30) is offset from the spray nozzle body (11), and wherein the retaining element (20) comprises an annular section adapted to be laterally engaged to the screw (30) and forming the stop that will retain the screw (30) captive to the spray nozzle (10).
